# EUROPÄISCHE PATENTSCHRIFT

(11) **EP 0 332 901 B1**
(45) Veröffentlichungstag und Bekanntmachung des Hinweises auf die Patenterteilung: **13.01.1993**
(21) Anmeldenummer: 89103317.7
(22) Anmeldetag: 24.02.1989
(51) Int. Cl.: F16F 13/00

(54) **Elastische und hydraulisch dämpfende Buchse**
Elastic and hydraulically damped sleeve
Manchon élastique à amortissement hydraulique

(30) Priorität: 15.03.1988 DE 3808630
(43) Veröffentlichungstag der Anmeldung: 20.09.1989
(73) Patentinhaber: METZELER GIMETALL AG, D-80992 München (DE)
(72) Erfinder: Sauer, Wolfgang, Dr., D-5412 Ransbach (DE); Waldecker, Ralf, D-5450 Neuwied 1 (DE)
(74) Vertreter: Michelis, Theodor

(56) Entgegenhaltungen:
- EP-A- 0 057 774
- EP-A- 0 242 254
- EP-A- 0 300 090
- DE-A- 3 721 445
- GB-A- 1 242 965

## Beschreibung

Die Erfindung bezieht sich auf eine elastische und hydraulisch dämpfende Buchse mit einer äußeren, topfförmigen Hülse und einer inneren zylindrischen Hülse, zwischen denen ein Elastomerkörper aus zwei, an beiden Enden der Buchse angeordneten, gummielastischen Tragfedern und mit oberhalb und unterhalb der inneren Hülse ausgesparten und mit Flüssigkeit gefüllten Kammern angeordnet ist, die über einen Überströmkanal miteinander in Verbindung stehen.

Eine derartige Buchse ist beispielsweise aus der GB-A-1 242 965 bekannt. Derartige hydraulisch dämpfende Buchsen weisen zwar ein gutes Dämpfungsverhalten bei niedrigen Frequenzen durch die dabei mögliche Verdrängung der Flüssigkeit von einer Kammer in die andere auf, ihr akustisches Verhalten, d.h. die Entkopplung hoher Frequenzen, ist jedoch unbefriedigend, da die Flüssigkeitskammern von relativ starren Wänden umgeben und abgegrenzt sind. Darüberhinaus ergeben sich bei dem bekannten Lager Schwierigkeiten bei großen Belastungen, da dort der Überströmkanal durch das Material des Elastomerkörpers geführt ist, wodurch der Kanal seinen Querschnitt abhängig von der Belastung stark ändern kann.

Eine weitere Buchse mit den Merkmalen gemäß oberbegriff des Anspruchs 1 ist aus der EP-A-0 242 254 bekannt, bei der ebenfalls die Flüssigkeitskammern zwar von elastischen, aber dennoch relativ starren Wänden begrenzt sind, wodurch sich ebenfalls Nachteile für eine akustische Entkopplung ergeben.

Der vorliegenden Erfindung liegt daher die Aufgabe zugrunde, eine hydraulisch dämpfende Buchse zu schaffen, die eine optimale Frequenzentkopplung ermöglicht und bei der die dynamische Steifigkeit für eine gute Isolierung akustischer Schwingungen stark reduziert werden kann.

Zur Lösung dieser Aufgabe ist erfindungsgemäß vorgesehen, daß die durch die beiderseitigen Tragfedern begrenzte Ringkammer durch zwei, sich horizontal und radial zwischen der inneren und der äußeren Hülse erstreckenden, gummielastischen Membranen in die zwei Kammern unterteilt ist und daß zentral umlaufend auf der Innenseite der äußeren Hülse ein ringförmiger Einsatz von der Breite der Flüssigkeitskammern angeordnet ist, der eine mittige, radiale Einziehung aufweist, welche zusammen mit der äußeren Hülse den Überströmkanal bildet.

Durch die Unterteilung des Ringraumes zwischen den voneinander beabstandeten Tragfedern in zwei Flüssigkeitskammern durch eine weichelastische Gummimembran ergibt sich wegen deren Volumennachgiebigkeit eine Reduzierung der dynamischen Steifigkeit und damit eine gute Isolierung akustischer Schwingungen.

Zweckmäßigerweise sind die Tragfedern konisch ausgebildet und jeweils zwischen zwei entsprechend dem Konuswinkel geneigten umlaufenden Stützschultern auf der Innenhülse und in der Außenhülse angeordnet.

Dabei können die beiden Tragfedern mit gegeneinander gerichteten Anstellwinkeln angeordnet sein. Es ist aber auch möglich, daß die Tragfedern in gleicher Anstellrichtung parallel hintereinander angeordnet sind.

Mit einer derartigen Ausbildung der Tragfedern als konische Ringe können Zug- und Druckkräfte in axialer Richtung mit ausreichender Lebensdauer bei dynamischer Wechselbeanspruchung sicher aufgenommen werden.

Eine weitere Möglichkeit besteht darin, daß die eine konische Form aufweisende Tragfedern unmittelbar auf die Innenhülse aufvulkanisiert und nach Aufschrumpfen der Außenhülse axial so weit vorgespannt sind, daß sie angenähert radial ausgerichtet sind.

Zum leichteren Einbau und zur flüssigkeitdichten Halterung der Membran an ihrer Außenkante ist der den Überströmkanal begrenzende, radial innenliegende Einsatz zweckmäßigerweise in Horizontalebene der Buchse in zwei Halbschalen geteilt und weist im Bereich der Teilungsfugen je eine radial nach innen angeformte, kreissegmentförmige Nut auf, in die die radial äußeren Kanten der Membranen eingespannt sind.

Die radiale Einziehung der beiden Halbschalen kann dabei im Bereich der einen Teilungsfuge geschlossen sein, wobei die beiden Halbschalen unterhalb und oberhalb dieser Teilungsfuge mit angenähert tangential nach innen ausmündenden Schlitzen versehen sind, die die Ein- und Austrittsöffnungen vom Überströmkanal in die Flüssigkeitskammern bilden.

Zur Ausbildung eines Anschlages in axialer Richtung für die Buchse können die radialen Einziehungen der Halbschalen mit einem radial nach innen gerichteten Ansatz versehen sein, an dem dann die Tragfeder-Stützschultern auf der Innenhülse aufschlagen.

Es ist aber auch möglich, daß auf mindestens einer der Stirnseiten der Außenhülse ein umlaufender Gummiwulst als Axialanschlag vorgesehen ist.

Zur Erhöhung der Entkopplungswirkung der Membranen können in diese stabförmige Tilgermassen aus starrem Material einvulkanisiert sein.

Bei einer speziellen Ausführung ist es auch möglich, daß eine der konischen Tragfedern als volumennachgiebige Stirnwand mit geringerer Dicke als der der zweiten Tragfeder ausgebildet ist, um damit eine noch größere Volumennachgiebigkeit der Flüssigkeitskammern zu erreichen.

Zweckmäßigerweise sind die freien Umfangsbereiche der Innenbuchse mit einer durchgehenden Gummischicht überzogen. Damit können dann die Innenhülse mit allen Gummiteilen in Form von Tragfedern, Membranen, externen Anschlägen und Innenhülsenüberzug als einstückiges Vulkanisationsteil hergestellt sein.

Anhand einer schematischen Zeichnung sind Aufbau und Funktionsweise von Ausführungsbeispielen nach der Erfindung näher erläutert. Dabei zeigen
- Fig. 1: einen Längsschnitt durch das Grundprinzip einer hydraulisch dämpfenden Buchse,
- Fig. 2: einen Querschnitt durch diese Buchse entsprechend der Schnittlinie II-II nach Fig. 1,
- Fig. 3: eine Variante des Querschnittes nach Fig. 2 mit zusätzlichen Tilgermassen in der Membran,
- Fig. 4: einen Längsschnitt durch eine Buchse mit einem internen Axialanschlag,
- Fig. 5: einen Längsschnitt durch das Vulkanisationsteil mit auf die glatte Innenhülse aufvulkanisierten, konischen Tragfedern,
- Fig. 6: die komplettierte Buchse nach Fig. 5 mit Vorspannung der Tragfedern,
- Fig. 7: einen Längsschnitt durch eine Buchse mit gleichsinniger Anordnung der Tragfedern hintereinander und
- Fig. 8: einen Längsschnitt durch eine weitere Variante einer Buchse mit einer volumenelastischen Stirnwandung.

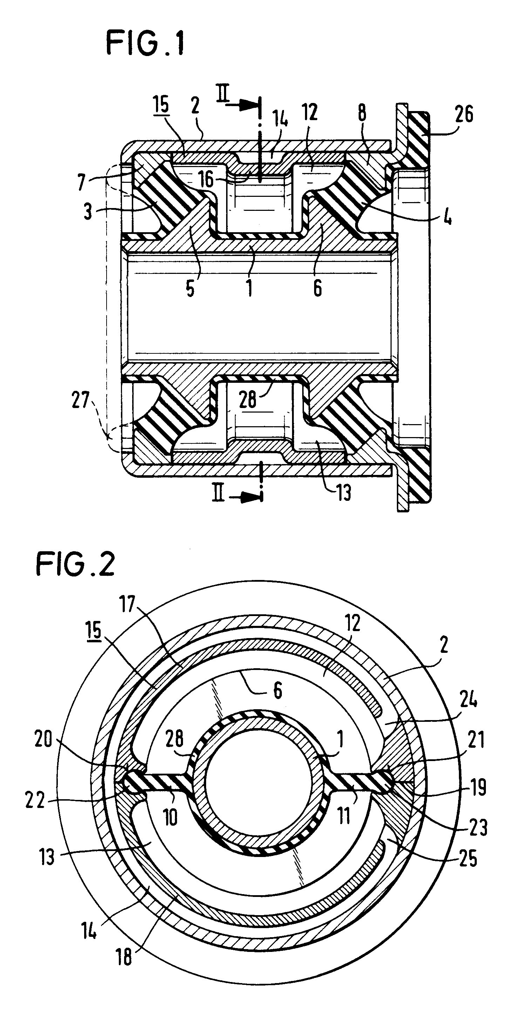

Wie man zunächst aus Fig. 1 ersieht, besteht die hydraulisch dämpfende Buchse aus einer inneren zylindrischen Hülse 1 und einer äußeren topfförmigen Hülse 2, zwischen denen jeweils am Ende zwei Tragfedern 3 und 4, die zur Mitte hin konisch zulaufend ausgebildet sind, unter gegeneinander gerichteten Anstellwinkeln angeordnet sind. Die Tragfedern 3 und 4 stützen sich dabei an der Innenhülse 1 auf entsprechend dem Konuswinkel abgeschrägten, nach außen gerichteten Schultern 5 und 6 und gegenüber in der Außenhülse 2 über entsprechende konische Ringe 7 und 8 ab.

Wie man aus dem Querschnitt nach Fig. 2 ersieht, ist der somit entstehende Ringraum zwischen der Innenhülse 1 und der Außenhülse 2 sowie den beiden Tragfedern 3 und 4 in horizontaler Richtung durch gummielastische Membranen 10 und 11 in zwei Kammern 12 und 13 unterteilt, die mit Flüssigkeit gefüllt sind. Eine Verbindung der beiden Kammern 12 und 13 erfolgt über einen Kanal 14, der von der Innenfläche der Außenhülse 2 und einem ringförmigen Einsatz 15 mit einer radialen Einziehung 16 gebildet wird. Der Einsatz 15 erstreckt sich dabei über die gesamte Breite der Flüssigkeitskammern 12 und 13 und beabstandet damit gleichzeitig die beiden Ringe 7 und 8 bzw. den radial außenliegenden Abstand der Tragfedern 3 und 4.

Wie man aus Fig. 2 erkennt, ist der Einsatz 15 an der Horizontalfuge 19 geteilt, so daß sich zwei Halbschalen 17 und 18 ergeben, an die im Bereich der Teilungsfuge 19 je eine kreissegmentförmige Nut 20 und 21 angeformt ist, in der die verdickte äußere Kante 22 und 23 der Membranen 10 und 11 flüssigkeitsdicht eingespannt sind.

Auf einer Seite der Teilungsfuge 19 ist die radiale Einziehung 16 und damit der entsprechende Kanalabschnitt geschlossen. Unterhalb und oberhalb davon sind jedoch in den Halbschalen 17 und 18 tangential nach innen ausmündende Schlitze 24 und 25 vorgesehen, die die Ein- und Austrittsöffnungen vom Überströmkanal 14 in die Flüssigkeitskammern 12 und 13 bilden.

Bei dem Ausführungsbeispiel nach Fig. 1 ist an der einen Stirnseite der Außenhülse 2 ein axialer Anschlag in Form einer Gummiwulst 26 vorgesehen. In gleicher Weise kann auf der anderen Stirnseite ebenfalls ein axialer Anschlag 27 vorgesehen werden, der nur gestrichelt dargestellt ist.

Wie weiter aus Fig. 1 zu ersehen ist, sind die freien Umfangsflächen der Innenhülse 1 mit einer durchgehenden Gummischicht 28 überzogen. Damit ergibt sich der große Vorteil, daß die Buchse nur ein einziges zusammenhängendes Vulkanisationsteil enthält, das die Tragfedern 3 und 4 mit den Außenringen 7 und 8, die Membranen 10 und 11, die Gummischicht 28 sowie den axialen Anschlag 26 und ggf. den Anschlag 27 umfaßt und damit alle wesentlichen Funktionen enthält.

Beim Zusammenbau der Buchse mittels der topfförmigen Außenhülse 2 werden die konusförmigen Tragkörper 3 und 4 in axialer Richtung vorgespannt, wobei das Maß der axialen Vorspannung durch die Breite der Halbschalen 17 und 18 bestimmt ist, um damit die Lebensdauer bei dynamischer Wechselbelastung in axialer Zug- und Druckrichtung zu erhöhen. Gleichzeitig ist die Anstellung der beiden Tragkörper 3 und 4, d.h. der Winkel des Konus zur Mittelachse so gewählt, daß Zug- und Druckkräfte in axialer Richtung mit ausreichender Lebensdauer bei dynamischer Wechselbeanspruchung aufgenommen werden können.

Durch die Gestaltung und Anordnung der Membranen 10 und 11 sowie deren Volumennachgiebigkeit wird die Entkopplung kleinerer Anregungsamplituden und damit die Reduzierung der dynamischen Steifigkeit und eine gute Isolation akustischer Schwingungen erreicht, da bei einer Druckdifferenz zwischen den beiden Kammern 12 und 13 diese Membrane 10 und 11 für einen Teil der verdrängten Flüssigkeitsmasse Volumen freigeben.

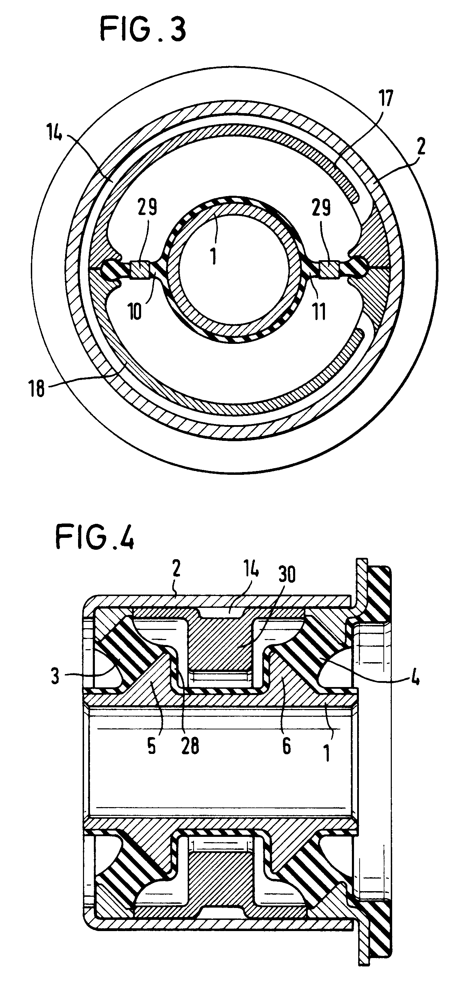

Eine wirksamere Entkopplung über einen schmalen Frequenzbereich kann man durch Anregung phasenverschobener Gegenschwingungen mit einer Ausgestaltung der Buchse erreichen, wie sie in Fig. 3 dargestellt ist. Dazu sind in die Membranen 10 und 11 gegenschwingende Massen 29 einvulkanisiert, die punktförmig oder stabförmig ausgebildet sind und aus Stahl, Aluminium oder Kunststoff bestehen können. Mit der Anordnung derartiger zusätzlicher Tilgermassen 29 kann die dynamische Steifigkeit der Buchse weiter reduziert werden, um ein gut isolierendes Übertragungsverhalten zu erreichen.

In Fig. 4 ist ein Ausführungsbeispiel mit einem innerhalb der Buchse liegenden Anschlag 30 für beide axiale Richtungen dargestellt. Dieser Anschlag 30 wird dadurch gebildet, daß die radial innenliegende Wandung des Überströmkanals 14 radial nach innen soweit verlängert ist, daß der Anschlag 30 bei entsprechenden Zug- oder Druckkräften in axialer Richtung gegen die Rückseiten der Schultern 5 oder 6 schlägt und damit die axiale Beweglichkeit von Innenhülse 1 und Außenhülse 2 zueinander begrenzt. Durch die Gummischicht 28 wird gleichzeitig ein derartiges axiales Anschlagen hinreichend gedämpft.

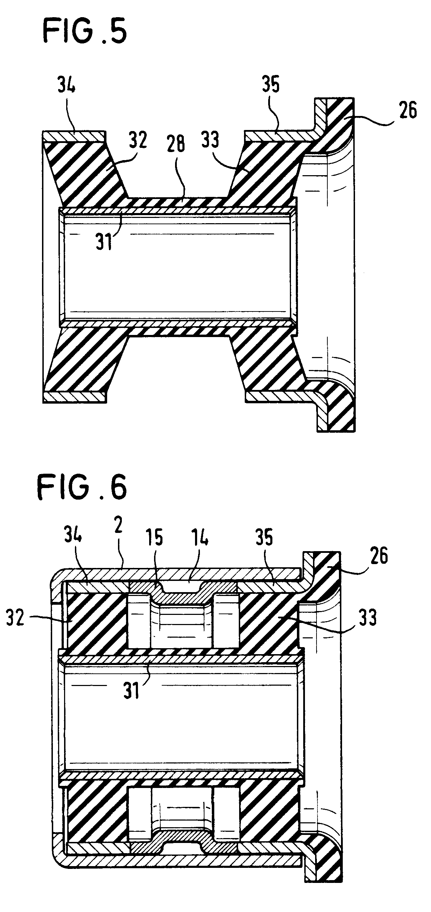

In Fig. 5 und 6 ist eine Buchse mit einer anderen Art der Gestaltung und Festlegung der Tragfedern gezeigt. Dabei sind auf eine auch am Außenumfang glatte Innenhülse 31 zwei zunächst konische Tragfedern 32 und 33 mit den Außenringen 34 und 35 aufvulkanisiert.

Beim Zusammenbau entsprechend Fig. 6 durch Einfügen des ringförmigen Einsatzes 15 und Aufschrumpfen der Außenhülse 2 auf die Ringe 34 und 35 können dann die zunächst konischen Tragfedern 32 und 33 soweit vorgespannt werden, daß sie sich praktisch radial erstrecken. Damit ergibt sich eine axial stark vorgespannte Buchse, die in radialer Richtung sehr steif ist.

Selbstverständlich können die Tragfedern 32 und 33 aber auch weniger stark vorgespannt werden, so daß der Konuswinkel der Tragfedern nur wenig von der in Fig. 2 gezeigten Größe abweicht.

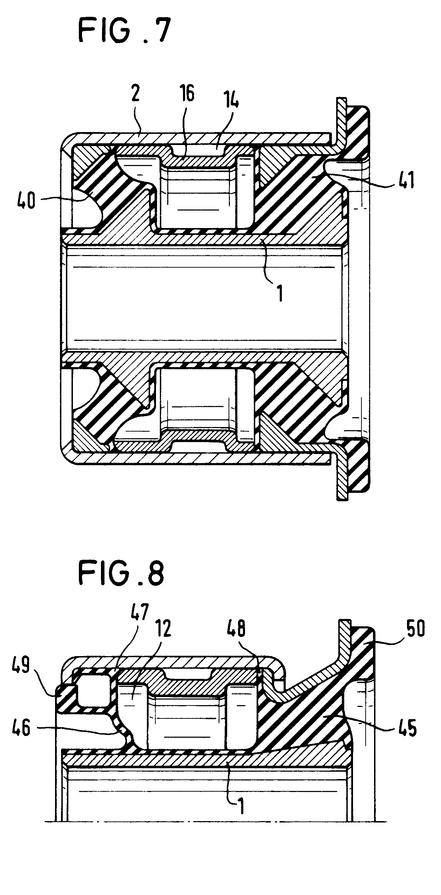

Das Ausführungsbeispiel nach Fig. 7 zeigt eine Buchse, bei der die Tragfedern 40 und 41 nicht gegeneinander wie in Fig. 1, sondern hintereinander in gleicher Anstellrichtung angeordnet sind. Eine derartige Anordnung ist insbesondere bei Buchsen von Vorteil, die vorzugsweise Kräfte aufnehmen, unter denen die Tragfedern 40 und 41 axial komprimiert werden.

Bei dem Ausführungsbeispiel nach Fig. 8 ist eine konische Tragfeder 45 relativ großen Volumens vorgesehen, während auf der anderen Seite lediglich eine volumennachgiebige Seitenwand 46 angeordnet ist, die eine größere Volumennachgiebigkeit für die Flüssigkeitskammer 12 ermöglicht. Auch hierbei ist lediglich ein einziges Vulkanisationsteil erforderlich, das die Bauteile Innenhülse 1, Tragfeder 45, Seitenwand 46, die entsprechenden Dichtungen 47 und 48 sowie die axialen Anschläge 49 und 50 umfaßt.

Mit der beschriebenen Gestaltung derartiger hydraulisch dämpfender Buchsen ist also einmal ein einfacher Aufbau mit nur einem einzigen Vulkanisationsteil möglich. Trotzdem weist diese Buchse neben einer guten Dämpfung niedriger Frequenzen auch ein ausgezeichnetes akustisches Verhalten durch Entkopplung hochfrequenter Schwingungen auf.

## Patentansprüche

1. Elastische und hydraulisch dämpfende Buchse mit einer äußeren, topfförmigen Hülse (2) und einer inneren zylindrischen Hülse (1), zwischen denen ein Elastomerkörper aus zwei, an beiden Enden der Buchse angeordneten, gummielastischen Tragfedern (3, 4) und mit oberhalb und unterhalb der inneren Hülse (1) ausgesparten und mit Flüssigkeit gefüllten Kammern (12, 13) angeordnet ist, die über einen Überströmkanal (14) miteinander in Verbindung stehen, dadurch gekennzeichnet, daß die durch die beiderseitigen Tragfedern (3, 4) begrenzte Ringkammer durch zwei, sich horizontal und radial zwischen der inneren und der äußeren Hülse (1, 2) erstreckenden, gummielastischen Membranen (10, 11) in die zwei Kammern (12, 13) unterteilt ist und daß zentral umlaufend auf der Innenseite der äußeren Hülse (2) ein ringförmiger Einsatz (15) von der Breite der Flüssigkeitskammern (12, 13) angeordnet ist, der eine mittige, radiale Einziehung (16) aufweist, welche zusammen mit der äußeren Hülse (2) den Überströmkanal (14) bildet.

2. Buchse nach Anspruch 1, dadurch gekennzeichnet, daß die Tragfedern (3, 4) konisch ausgebildet sind und jeweils zwischen zwei entsprechend dem Konuswinkel geneigten, umlaufenden Stützschultern (5, 6; 7, 8) auf der Innenhülse (1) und in der Außenhülse (2) angeordnet sind.

3. Buchse nach Anspruch 2, dadurch gekennzeichnet, daß die beiden konischen Tragfedern (3, 4) mit gegeneinander gerichteten Anstellwinkeln angeordnet sind.

4. Buchse nach Anspruch 2, dadurch gekennzeichnet, daß die Tragfedern (40, 41) in gleicher Anstellrichtung parallel hintereinander angeordnet sind.

5. Buchse nach Anspruch 1, dadurch gekennzeichnet, daß die eine konische Form aufweisenden Tragfedern (32, 33) unmittelbar auf die Innenhülse (31) aufvulkanisiert und nach Aufschrumpfen der Außenhülse (2) axial so weit vorgespannt sind, daß sie angenähert radial ausgerichtet sind.

6. Buchse nach Anspruch 1, dadurch gekennzeichnet, daß der den Überströmkanal begrenzende, radial innenliegende Einsatz (15) in Horizontalebene (19) der Buchse in zwei Halbschalen (17, 18) geteilt ist und im Bereich der Teilungsfuge (19) je eine radial nach innen angeformte kreissegmentförmige Nut (20, 21) aufweist, in die die radial äußeren Kanten (22, 23) der Membranen (10, 11) eingespannt sind.

7. Buchse nach Anspruch 6, dadurch gekennzeichnet, daß die radiale Einziehung (16) der beiden Halbschalen (17, 18) im Bereich der einen Teilungsfuge (19) geschlossen ist und die beiden Halbschalen (17, 18) unterhalb und oberhalb dieser Teilungsfuge (19) mit angenähert tangential nach innen ausmündenden Schlitzen (24, 25) versehen sind, die die Ein- und Austrittsöffnungen vom Überströmkanal (14) in die Flüssigkeitskammern (12, 13) bilden.

8. Buchse nach Anspruch 3 und 7, dadurch gekennzeichnet, daß die radiale Einziehung (16) der Halbschalen (17, 18) einen radial nach innen gerichteten Ansatz (30) als Anschlag in Axialrichtung für die Tragfedern (3, 4) aufweist.

9. Buchse nach Anspruch 1, dadurch gekennzeichnet, daß mindestens auf einer der Stirnseiten der Außenhülse (2) ein umlaufender Gummiwulst (26; 27) als Axialanschlag vorgesehen ist.

10. Buchse nach Anspruch 1 oder 6, dadurch gekennzeichnet, daß in die Membranen (10, 11) eine stabförmige Tilgermasse (29) aus starrem Material einvulkanisiert ist.

11. Buchse nach Anspruch 1, dadurch gekennzeichnet, daß eine der konischen Tragfedern (45, 46) als volumennachgiebige Stirnwandung (46) mit geringerer Dicke als der der zweiten Tragfeder (45) ausgebildet ist.

12. Buchse nach einem oder mehreren der Ansprüche 1 bis 10, dadurch gekennzeichnet, daß die freien Umfangsbereiche der Innenbuchse (1) mit einer durchgehenden Gummischicht (28) überzogen sind.

13. Buchse nach Anspruch 1 bis 11, dadurch gekennzeichnet, daß die Innenhülse (1; 31) mit allen Gummiteilen in Form von Tragfedern (3, 4; 32, 33; 40, 41; 45, 46), Membranen (10, 11), externen Anschlägen (26, 27) und Innenhülsenüberzug (28) als einstückiges Vulkanisationsteil hergestellt ist.

## Claims

1. Flexible and hydraulically damping bush, having an outer cup-shaped shell (2) and an inner cylindrical shell (1), disposed between which is an elastomer body comprising two rubber-elastic bearing springs (3, 4) disposed at either end of the bush and fluid-filled chambers (12, 13), which are left open above and below the inner shell (1) and are connected to one another by an overflow channel (14), characterized in that the annular chamber delimited by the bearing springs (3, 4) on either side is divided into the two chambers (12, 13) by two rubber-elastic diaphragms (10, 11) extending horizontally and radially between the inner and the outer shell (1, 2), and that an annular insert (15) of the width of the fluid chambers (12, 13) is disposed centrally extending around the inside of the outer shell (2) and has a central radially recessed portion (16) which, together with the outer shell (2), forms the overflow channel (14).

2. Bush according to claim 1, characterized in that the bearing springs (3, 4) are of a conical construction and are each disposed between two circumferential support shoulders (5, 6; 7, 8), inclined according to the cone angle, on the inner shell (1) and in the outer shell (2).

3. Bush according to claim 2, characterized in that the two conical bearing springs (3, 4) are disposed with their spring-loading angles directed one towards the other.

4. Bush according to claim 2, characterized in that the bearing springs (40, 41) are disposed in the same spring-loading direction parallel one behind the other.

5. Bush according to claim 1, characterized in that the cone-shaped bearing springs (32, 33) are vulcanized directly onto the inner shell (31) and, after the outer shell (2) has been shrunk on, are axially preloaded to such an extent that they are approximately radially aligned.

6. Bush according to claim 1, characterized in that the radially inner-lying insert (15) delimiting the overflow channel is divided in a horizontal plane (19) of the bush into two half-shells (17, 18) and has in the region of each joint (19) a radially inwardly formed, circular-segment-shaped groove (20, 21), into which the radially outer edges (22, 23) of the diaphragms (10, 11) are clamped.

7. Bush according to claim 6, characterized in that the radially recessed portion (16) of the two half-shells (17, 18) is closed in the region of the one joint (19) and the two half-shells (17, 18) below and above said joint (19) are provided with slots (24, 25), which open out approximately tangentially inwards and form the inlet and outlet openings of the overflow channel (14) into the fluid chambers (12, 13).

8. Bush according to claim 3 and 7, characterized in that the radially recessed portion (16) of the half-shells (17, 18) has a radially inwardly directed extension (30) as a stop in an axial direction for the bearing springs (3, 4).

9. Bush according to claim 1, characterized in that a circumferential rubber bead (26; 27) is provided at least on one of the end faces of the outer shell (2) as an axial stop.

10. Bush according to claim 1 or 6, characterized in that a rod-shaped quenching body (29) made of rigid material is vulcanized into the diaphragms (10, 11).

11. Bush according to claim 1, characterized in that one of the conical bearing springs (45, 46) takes the form of a volume-compliant end wall (46) of a lesser thickness than the end wall of the second bearing spring (45).

12. Bush according to one or more of claims 1 to 10, characterized in that the free peripheral regions of the inner shell (1) are coated with a continuous rubber layer (28).

13. Bush according to claim 1 to 11, characterized in that the inner shell (1; 31), including all the rubber parts in the form of bearing springs (3, 4; 32, 33; 40, 41; 45, 46), diaphragms (10, 11), external stops (26, 27) and inner shell coating (28), is manufactured as a single vulcanized part.

## Revendications

1. Manchon élastique et à amortissement hydraulique, comprenant une douille extérieure (2) en forme de cuvette et une douille intérieure (1) cylindrique entre lesquelles est interposée une pièce en élastomère constituée de deux ressorts supports (3, 4) ayant l'élasticité du caoutchouc et disposés aux deux extrémités du manchon, et ayant des chambres (12, 13) ménagées au-dessus et en-dessous de la douille intérieure (1) et emplies de liquide, qui communiquent entre elles par un canal de passage (14), caractérisé en ce que la chambre annulaire délimitée par les ressorts supports (3, 4) des deux côtés est subdivisée en deux chambres (12, 13) par deux membranes (10, 11) ayant l'élasticité du caoutchouc et s'étendant horizontalement et radialement entre les douilles intérieure et extérieure (1, 2), et en ce qu'il est prévu, au centre tout autour de la face intérieure de la douille extérieure (2), une pièce rapportée (15) annulaire de la largeur des chambres à liquide (12, 13) et comportant un renfoncement central et radial qui, avec la douille extérieure (2), forme le canal de passage (14).

2. Manchon suivant la revendication 1, caractérisé en ce que les ressorts supports (3, 4) sont coniques et sont disposés, respectivement, entre deux épaulements d'appui (5, 6 ; 7, 8) de la douille intérieure (1) qui font tout le tour et qui sont inclinés conformément à l'angle du cône et la douille extérieure (2).

3. Manchon suivant la revendication 2, caractérisé en ce que les deux ressorts supports (3, 4) coniques sont disposés suivant des angles opposés.

4. Manchon suivant la revendication 2, caractérisé en ce que les ressorts supports (40, 41) sont disposés parallèlement l'un derrière l'autre, en faisant le même angle.

5. Manchon suivant la revendication 1, caractérisé en ce que l'un des ressorts supports (32, 33) de forme conique est appliqué par vulcanisation directement sur la douille intérieure (31) et, après retrait de la douille extérieure (2), est pré-contraint axialement jusqu'à être orienté à peu près radialement.

6. Manchon suivant la revendication 1, caractérisé en ce que la pièce rapportée (15), délimitant le canal de passage et se trouvant radialement vers l'intérieur, est subdivisée dans un plan horizontal (19) du manchon en deux hémi-coquilles (17, 18) et comporte, dans la partie des plans de joints (19), une gorge (20, 21) en forme de segment de cercle, ménagée radialement vers l'intérieur et dans laquelle sont bloqués les bords extérieurs (22, 23) radiaux des membranes (10, 11).

7. Manchon suivant la revendication 6, caractérisé en ce que le renfoncement (16) radial des deux hémi-coquilles (17, 18) est fermé dans la région des plans de joints (19) et les deux hémi-coquilles (17, 18) sont munies, en-dessous et au-dessus de ces plans de joints (19), de fentes (24, 25) débouchant à peu près tangentiellement vers l'intérieur et formant les orifices d'entrée et de sortie du canal de passage (14) dans les chambres à liquide (12, 13).

8. Manchon suivant la revendication 3 ou 7, caractérisé en ce que le renfoncement (16) radial des hémi-coquilles (17, 18) présente un prolongement (30) radial et dirigé vers l'extérieur servant de butée en direction axiale, pour les ressorts supports (3, 4).

9. Manchon suivant la revendication 1, caractérisé en ce qu'au moins sur l'un des côtés frontaux de la douille extérieure (2) est prévu un bourrelet (26, 27) en caoutchouc faisant tout le tour et servant de butée axiale.

10. Manchon suivant la revendication 1 ou 6, caractérisé en ce que, dans les membranes (10, 11), est vulcanisée une masse d'équilibrage (29) en forme de bâtonnet et en un matériau rigide.

11. Manchon suivant la revendication 1, caractérisé en ce que l'un des ressorts supports (45, 46) coniques est constitué sous la forme d'une paroi frontale (46) cédant élastiquement en volume et de moindre épaisseur que le second ressort support (45).

12. Manchon suivant l'une ou plusieurs des revendications 1 à 10, caractérisé en ce que les parties périphériques libres de la douille intérieure (1) sont revêtues d'une couche de caoutchouc (28) continue.

13. Manchon suivant l'une des revendications 1 à 11, caractérisé en ce que la douille intérieure (1, 31) est fabriquée avec toutes les pièces en caoutchouc sous forme de ressorts supports (3, 4 ; 32, 33 ; 40, 41 ; 45, 46) de membranes (10, 11), de butées extérieures (26, 27) et du revêtement intérieur de douille (28), sous la forme d'une pièce vulcanisée d'un seul tenant.
